# EUROPEAN PATENT APPLICATION

(11) **EP 4 553 478 A1**
(43) Date of publication of application: **14.05.2025**
(21) Application number: 23835216.5
(22) Date of filing: 08.06.2023
(51) Int. Cl.: G01N 1/00, G01N 21/76

(54) **GAS ANALYZING DEVICE, PRESSURE CONTROL METHOD, AND PROGRAM**

(30) Priority: 06.07.2022 JP 2022109286
(71) Applicant: HORIBA, Ltd., Minami-ku Kyoto-shi Kyoto 601-8510 (JP)
(72) Inventor: NAGASAWA, Kenya, Kyoto-shi, Kyoto 601-8510 (JP); YAMADA, Ryusuke, Kyoto-shi, Kyoto 601-8510 (JP); MIZUMOTO, Kazunori, Kyoto-shi, Kyoto 601-8510 (JP)
(74) Representative: Müller Hoffmann & Partner
(86) International application number: PCT/JP2023/021331
(87) International publication number: WO 2024/009680

(57) **Abstract**

To suppress pressure fluctuation in a reaction unit, a gas analyzing device (100) includes a reaction unit (1), an evacuating unit (3), a first gas line (L1), a pressure control unit (5), a pressure measuring unit (7), and a control unit (9). The reaction unit (1) allows an analysis target gas and a luminescence-inducing gas to interact with each other. The evacuating unit (3) evacuates the reaction unit (1). The first gas line (L1) connects the reaction unit (1) and the evacuating unit (3). The pressure control unit (5) is connected to the first gas line (L1) and is configured to introduce external gas into the first gas line (L1), and controls a flow rate of the gas introduced into the first gas line (L1) to control pressure in the reaction unit (1). The pressure measuring unit (7) measures absolute pressure in the reaction unit (1). The control unit (9) controls the pressure control unit (5) based on the absolute pressure in the reaction unit (1) measured by the pressure measuring unit (7), and controls the flow rate of the gas introduced into the first gas line (L1) so that the pressure in the reaction unit (1) becomes a predetermined pressure.

## Description

### TECHNICAL FIELD

The present invention relates to a gas analyzing device using a chemical luminescence analysis method, a pressure control method for controlling pressure in a gas analyzing device, and a program that causes a computer to execute the pressure control method.

### BACKGROUND ART

Conventionally, there is known the gas analyzing device for analyzing an analysis target gas (e.g., measuring concentration of the gas), by using a chemical luminescence analysis method (CLA) (see, for example, Patent Citation 1). In this device, the analysis target gas and a luminescence-inducing gas such as ozone are introduced into a reaction unit, and reaction light generated by interaction between the analysis target gas and luminescence-inducing gas is detected, to analyze the analysis target gas.

### PRIOR ART CITATIONS

### PATENT CITATION

Patent Citation 1: JP-A-H7-301603

### SUMMARY OF INVENTION

### TECHNICAL PROBLEM

An analysis result of the gas analyzing device using the chemical luminescence analysis method is largely affected by pressure in the reaction unit into which the analysis target gas and the luminescence-inducing gas are introduced. In other words, in order to obtain an accurate analysis result by the gas analyzing device using the chemical luminescence analysis method, it is necessary to maintain the pressure in the reaction unit to be constant during the analysis. In a conventional device, a pressure difference regulator is used for maintaining a difference between atmospheric pressure and pressure in the reaction unit to be constant, so that the pressure in the reaction unit is constant.

However, because the pressure difference regulator maintains the difference between the atmospheric pressure and the pressure in the reaction unit to be constant, when using the pressure difference regulator, the pressure in the reaction unit may fluctuate due to fluctuation of the atmospheric pressure, depending on an atmospheric condition, an operating condition of the gas analyzing device, or the like. **In** the chemical luminescence analysis method, it is preferred to set the pressure in the reaction unit to be low, in order to enhance sensitivity in detecting chemical luminescence, but when using the pressure difference regulator, if the pressure in the reaction unit is set to be low, the pressure in the reaction unit may be affected by fluctuation of the atmospheric pressure, depending on the atmospheric condition, the operating condition of the gas analyzing device, or the like.

It is an object of the present invention to suppress the pressure fluctuation in the reaction unit into which the analysis target gas and the luminescence-inducing gas are introduced, in the gas analyzing device using the chemical luminescence analysis method.

### TECHNICAL SOLUTION

As means for solving the above problem, a plurality of embodiments are described below. These embodiments can be arbitrarily combined as necessary.

A gas analyzing device according to one aspect of the present invention is a device for analyzing an analysis target gas by a chemical luminescence analysis method. The gas analyzing device includes a reaction unit, an evacuating unit, a first gas line, a pressure control unit, a pressure measuring unit, and a control unit.

The reaction unit allows the analysis target gas and a luminescence-inducing gas to interact with each other.

The evacuating unit evacuates the reaction unit.

The first gas line connects the reaction unit and the evacuating unit.

The pressure control unit includes a gas flow passage having one end connected to the first gas line and the other end connected to the outside, for introducing external gas into the first gas line, to control the pressure in the reaction unit by controlling a flow rate of the gas introduced into the first gas line.

The pressure measuring unit measures absolute pressure in the reaction unit.

The control unit controls the pressure control unit based on the absolute pressure in the reaction unit measured by the pressure measuring unit, to control the flow rate of the gas introduced into the first gas line so that the pressure in the reaction unit becomes a predetermined pressure.

In the gas analyzing device described above, by controlling the inflow amount of the external gas into the first gas line in which the gas evacuated from the reaction unit flows, the pressure in the reaction unit is controlled. By this pressure control, in the gas analyzing device described above, the pressure in the reaction unit is not affected by pressure fluctuation of the external gas and is constant at a predetermined pressure.

In addition, by connecting the gas flow passage of the pressure control unit to the outside, and by introducing the external gas into the first gas line through this gas flow passage, the analysis target gas and/or the luminescence-inducing gas flowing in the first gas line do not flow into the pressure control unit. As a result, even if the analysis target gas or the luminescence-inducing gas contains a corrosive gas or the like, deterioration of the pressure control unit can be suppressed.

The gas analyzing device may further include a second gas line and a first orifice. The analysis target gas introduced into the analysis unit is introduced into the second gas line. The first orifice is disposed in the second gas line. In this way, the introduction amount of the analysis target gas into the reaction unit is constant, and hence the gas analyzing device can obtain a stable analysis result.

The gas analyzing device may further include a third gas line and a second orifice. The luminescence-inducing gas introduced into the analysis unit is introduced into the third gas line. The second orifice is disposed in the third gas line. In this way, the introduction amount of the luminescence-inducing gas into the reaction unit is constant, and hence the gas analyzing device can obtain a stable analysis result.

The pressure control unit may be a proportional control valve. In this way, it is possible to inexpensively realize a structure in which the pressure in the reaction unit is not affected by external pressure fluctuation.

The pressure control unit may be a piezo valve. In this way, the inflow amount of the external gas into the first gas line can be controlled more accurately. As a result, the pressure in the reaction unit is more hardly affected by the external pressure fluctuation.

The gas analyzing device may further include a photodiode. The photodiode detects reaction light generated by interaction between the analysis target gas and the luminescence-inducing gas in the reaction unit. The photodiode is an inexpensive and small element, and hence the gas analyzing device can be downsized at low cost.

A pressure control method according to another aspect of the present invention is a pressure control method of the gas analyzing device for analyzing an analysis target gas by a chemical luminescence analysis method. The gas analyzing device includes a reaction unit configured to allow the analysis target gas and a luminescence-inducing gas to interact with each other, an evacuating unit configured to evacuate the reaction unit, a first gas line configured to connect the reaction unit and the evacuating unit, and a pressure control unit connected to the first gas line to be capable of introducing external gas into the first gas line, the pressure control unit controlling a flow rate of the gas introduced into the first gas line, to control the pressure in the reaction unit. The pressure control method includes:
measuring absolute pressure in the reaction unit; and
controlling the pressure control unit based on the absolute pressure in the reaction unit, to control the flow rate of the gas introduced into the first gas line so that the pressure in the reaction unit becomes a predetermined pressure.

In the above pressure control method of the gas analyzing device, by controlling the inflow amount of the external gas into the first gas line in which the gas evacuated from the reaction unit flows, the pressure in the reaction unit is controlled. By this pressure control method, the pressure in the reaction unit is hardly affected by pressure fluctuation of the external gas. As a result, pressure fluctuation in the reaction unit can be suppressed.

A program according to another aspect of the present invention is a program that causes a computer to execute the above pressure control method of the gas analyzing device.

### ADVANTAGEOUS EFFECTS

The pressure in the reaction unit is hardly affected by pressure fluctuation of the external gas, and fluctuation thereof is suppressed. As a result, an accurate analysis result can be obtained by the gas analyzing device.

### BRIEF DESCRIPTION OF DRAWINGS

Fig. 1 is a diagram illustrating a structure of a gas analyzing device.
Fig. 2 is a diagram illustrating an example of a relationship between pressure at a post-stage of an orifice and a gas flow rate from the post-stage.
Fig. 3 is a flowchart illustrating an analysis operation of the gas analyzing device.
Fig. 4 is a diagram illustrating an example of pressure fluctuation of an external gas and pressure fluctuation of an inside space of a reaction unit.

### DESCRIPTION OF EMBODIMENTS

### 1. First Embodiment

### (1) Structure of Gas Analyzing Device

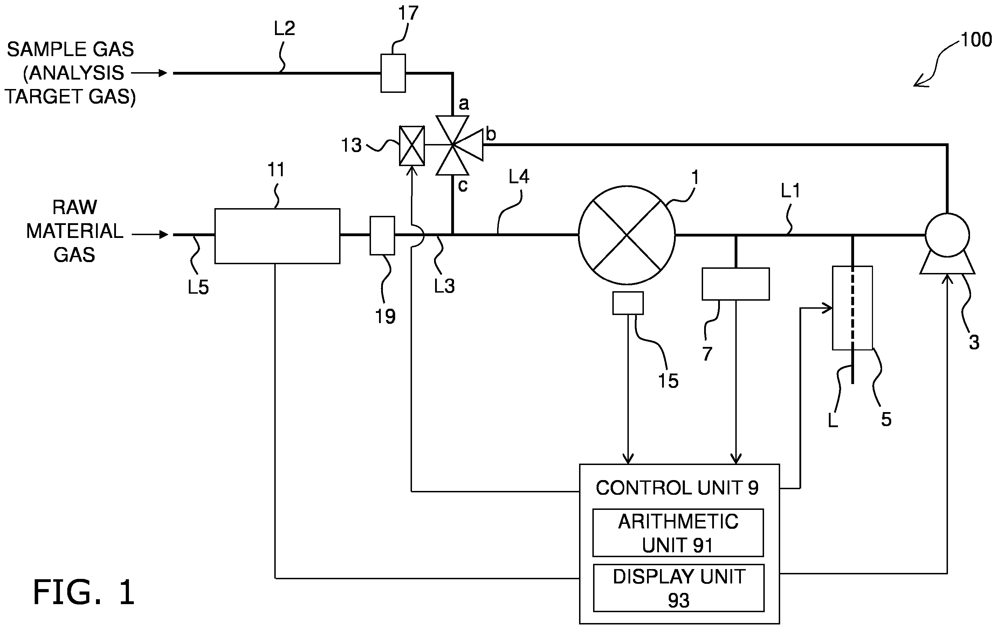

With reference to Fig. 1, a structure of a gas analyzing device 100 is described. Fig. 1 is a diagram illustrating a structure of the gas analyzing device. The gas analyzing device 100 illustrated in Fig. 1 is a device for analyzing an analysis target gas using a chemical luminescence method (CLA). The analysis target gas is, for example, a gas of nitrogen compound (such as nitrogen oxides (NOx)). Such analysis target gas is contained in a gas flowing in the air or a flue, or gases generated in various combustion processes, for example. The gas containing the analysis target gas described above is referred to as a sample gas. The gas analyzing device 100 is a device for measuring concentration of the analysis target gas contained in the sample gas, for example. The gas analyzing device 100 includes a reaction unit 1, an evacuating unit 3, a pressure control unit 5, a pressure measuring unit 7, and a control unit 9.

The reaction unit 1 is a member having an inside space to which a gas can be introduced. The reaction unit 1 is small (e.g., approximately 1 cm), and its inner space has a spiral shape. One end of the spiral inside space is connected to a first gas line L1, while the other end of the spiral inside space is connected to a fourth gas line L4. The first gas line L1 connects the reaction unit 1 and the evacuating unit 3.

The fourth gas line L4 is connected to a third gas line L3 and a gas port c of a gas switching unit 13. The third gas line L3 is connected to a luminescence-inducing gas generating unit 11. The luminescence-inducing gas generating unit 11 generates a luminescence-inducing gas using a raw material gas introduced through a fifth gas line L5, and introduces the generated gas into the third gas line L3. The luminescence-inducing gas is a gas that interacts with the analysis target gas contained in the sample gas, to generate reaction light. The luminescence-inducing gas generating unit 11 generates discharge at the point where the raw material gas is introduced, to convert oxygen (O₂) contained in the raw material gas into ozone (O₃) as the luminescence-inducing gas. The raw material gas is air, for example.

The gas switching unit 13 is, for example, a three-way electromagnetic valve having three gas ports a, b, and c. The gas port a is connected to a second gas line L2 into which the sample gas is introduced. The gas port b is connected to the evacuating unit 3. The gas port c is connected to the fourth gas line L4. The gas switching unit 13 alternately switches at a predetermined period between a state where gas can flow between the gas port a and the gas port b, and a state where gas can flow between the gas port a and the gas port c, in accordance with a signal from the control unit 9. This switching by the gas switching unit 13 allows the fourth gas line L4 to alternately introduce the sample gas and the luminescence-inducing gas into the inside space of the reaction unit 1, at a predetermined period.

The evacuating unit 3 evacuates the inside space of the reaction unit 1 through the first gas line L1. The evacuating unit 3 is a pump, for example. When the evacuating unit 3 evacuates the inside space of the reaction unit 1, the sample gas and the luminescence-inducing gas are introduced from the fourth gas line L4 into the inside space of the reaction unit 1. The sample gas and the luminescence-inducing gas introduced from the fourth gas line L4 flow from one end to the other end of the spiral inside space of the reaction unit 1, while they interact with each other to generate reaction light, and are evacuated to the first gas line L1 by the evacuating unit 3.

As the inside space into which the sample gas and the luminescence-inducing gas are introduced has a spiral shape, although the reaction unit 1 is small, the sample gas, a reference gas, and the luminescence-inducing gas can be efficiently interacted with each other. As a result, the analysis target gas contained in the sample gas and the luminescence-inducing gas can sufficiently interact with each other.

In order to increase sensitivity to the analysis target gas as much as possible in the gas analyzing device 100 having the small reaction unit 1, the evacuating unit 3 evacuates the inside space of the reaction unit 1 to a pressure as low as possible (e.g., approximately a few tens kPa).

A photodetector 15 is disposed in a vicinity of the reaction unit 1. The photodetector 15 detects the reaction light generated when the sample gas and the luminescence-inducing gas interact with each other in the reaction unit 1. As described above, because the reaction unit 1 is small, the area of light generation from the reaction unit 1 is also small. Therefore, it is preferred that the photodetector 15 is a small element in accordance with the size of the reaction unit 1. The photodetector 15 is a photodiode, for example.

As the photodiode is an inexpensive and small element, by using the photodiode for detecting the reaction light, the photodetector 15 can be small, and the reaction unit 1 can also be small. As a result, the gas analyzing device 100 can be downsized at low cost.

In addition, in the gas analyzing device 100, by setting pressure in the inside space of the reaction unit 1 as low as possible, even the small reaction unit 1 can generate the reaction light having high intensity. Thus, when the photodiode is used as the photodetector 15 for detecting the reaction light, the gas analyzing device 100 can detect the reaction light corresponding to concentration or the like of the analysis target gas.

The pressure control unit 5 is a device that includes a gas flow passage L and can adjust an opening degree of the gas flow passage L by a valve body or the like (not shown). One end of the gas flow passage L is connected to the first gas line L1. In contrast, the other end of the gas flow passage L is connected to the outside (e.g., the air). In this way, the pressure control unit 5 can introduce external gas (e.g., air) from the gas flow passage L into the first gas line L1. The external gas introduced into the first gas line L1 is evacuated by the evacuating unit 3, together with the gas introduced from the inside space of the reaction unit 1 into the first gas line L1.

By adjusting the opening degree of the gas flow passage L to adjust the external gas introduced into the first gas line L1, a suction force of the inside space of the reaction unit 1 by the evacuating unit 3 is adjusted. When the suction force of the inside space of the reaction unit 1 by the evacuating unit 3 is adjusted, the pressure in the inside space of the reaction unit 1 is adjusted. In other words, the pressure control unit 5 controls the flow rate of the external gas that is introduced into the first gas line, to control the pressure in the inside space of the reaction unit 1.

As the pressure control unit 5, it is possible to use, for example, a proportional control valve that adjusts an opening degree of its valve body by electromagnetic force, a piezo valve that adjusts an opening degree of the gas flow passage L using a piezo actuator, or the like. By using the proportional control valve as the pressure control unit 5, a structure in which the pressure in the inside space of the reaction unit 1 is not affected by external pressure fluctuation can be realized at low cost. By using the piezo valve as the pressure control unit 5, an inflow amount of the external gas into the first gas line L1 can be controlled more accurately.

The pressure measuring unit 7 is connected to the first gas line L1 and measures absolute pressure in the first gas line L1, to measure absolute pressure in the inside space of the reaction unit 1. The pressure measuring unit 7 outputs a signal related to a measurement result of the absolute pressure.

The control unit 9 is a computer system including a CPU, a storage device (such as a RAM, a ROM, an HDD, or an SSD), various interfaces, and a display. The control unit 9 includes an arithmetic unit 91 and a display unit 93. The arithmetic unit 91 includes the CPU, the storage device, and the various interfaces, included in the control unit 9, and performs processing related to control of components of the gas analyzing device 100. Specifically, the arithmetic unit 91 controls the evacuating unit 3. The arithmetic unit 91 controls the gas switching unit 13 to switch at a predetermined period between a state where the gas port a and the gas port b are connected to each other (the sample gas is not introduced into the fourth gas line L4), and a state where the gas port a and the gas port c are connected to each other (the sample gas is introduced into the fourth gas line L4).

The arithmetic unit 91 controls discharge generated inside the luminescence-inducing gas generating unit 11. The arithmetic unit 91 analyzes the analysis target gas based on a signal output from the photodetector 15. For instance, it calculates concentration of the analysis target gas contained in the sample gas.

The arithmetic unit 91 controls the opening degree of the gas flow passage L of the pressure control unit 5, based on the absolute pressure in the reaction unit 1 measured by the pressure measuring unit 7, to control the flow rate of the external gas introduced into the first gas line L1, so that the pressure in the reaction unit 1 becomes a predetermined pressure (e.g., a few tens kPa).

The arithmetic unit 91 may realize a part or the whole of the above control by executing a program stored in the storage device. In addition, the arithmetic unit 91 may realize a part or the whole of the above control by hardware.

The display unit 93 is a display of the control unit 9, and displays a display related to control of the gas analyzing device 100, a display related to analysis of the analysis target gas, an analysis result of the analysis target gas, and the like. The display unit 93 is a display such as a liquid crystal display or an organic EL display, for example.

As illustrated in Fig. 1, the gas analyzing device 100 includes a first orifice 17 and a second orifice 19. The first orifice 17 and the second orifice 19 each have a plate-like member (an orifice plate) having an aperture for narrowing a gas flow passage. In the first orifice 17 and the second orifice 19, the gas entering from one side of the orifice plate passes through the aperture of the orifice plate, and flows out to the other side of the orifice plate. As for the first orifice 17 and the second orifice 19, the side on which the gas flows in is referred to as a "front stage", and the side on which the gas flows out is referred to as a "post-stage".

The first orifice 17 is disposed in the second gas line L2 into which the sample gas is introduced. Specifically, the front stage of the first orifice 17 is connected to the side of the second gas line L2 into which the sample gas is introduced. In contrast, the post-stage of the first orifice 17 is connected to the second gas line L2 on the side of the gas port a of the gas switching unit 13.

The second orifice 19 is disposed in the third gas line L3 into which the luminescence-inducing gas is introduced. Specifically, the front stage of the second orifice 19 is connected to the third gas line L3 on an outlet side the luminescence-inducing gas generating unit 11 (i.e., the side on which the luminescence-inducing gas flows out). In contrast, the post-stage of the second orifice 19 is connected to the third gas line L3 on the side connected to the fourth gas line L4.

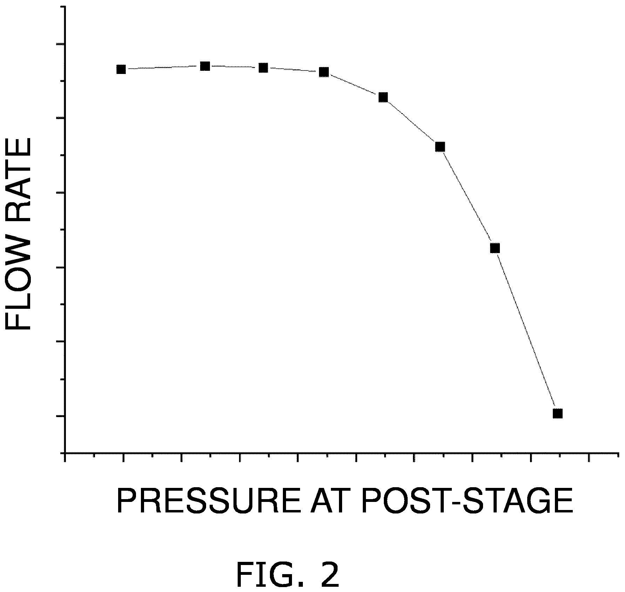

The first orifice 17 and the second orifice 19 each have a property that the flow rate of the gas flowing from the front stage to the post-stage becomes constant, when a pressure difference between the front stage and the post-stage becomes a certain threshold value or more. In other words, if the pressure at the front stage is the atmospheric pressure, the flow rate of the gas flowing out from the post-stage of the first orifice 17 or the second orifice 19 is constant, when the pressure at the post-stage is a predetermined value or less, as illustrated in Fig. 2. Further, in other words, if the pressure on the post-stage side is sufficiently low, the gas flow rate flowing out to the post-stage side is constant without being affected by pressure fluctuation on the front stage side. Fig. 2 is a diagram illustrating an example of a relationship between the pressure at the post-stage of the orifice and the gas flow rate from the post-stage.

The pressure at the position connected to the post-stage of the first orifice 17 or the second orifice 19 is reduced to a low pressure (approximately a few tens kPa). In contrast, the pressure at the position connected to the front stage of the first orifice 17 or the second orifice 19 is close to the atmospheric pressure. Therefore, the first orifice 17 can allow the introduction amount of the sample gas into the gas port a of the gas switching unit 13 to be constant, regardless of pressure fluctuation of the second gas line L2. In other words, a constant flow rate of the sample gas can be introduced into the inside space of the reaction unit 1, regardless of pressure fluctuation of the sample gas. The second orifice 19 can allow the introduction amount of the luminescence-inducing gas into the second gas line L2 to be constant, regardless of pressure fluctuation of the third gas line L3. In other words, a constant flow rate of the luminescence-inducing gas can be introduced into the inside space of the reaction unit 1, regardless of pressure fluctuation of the luminescence-inducing gas.

In this way, by disposing the first orifice 17 in the second gas line L2, and by disposing the second orifice 19 in the third gas line L3, the sample gas and the luminescence-inducing gas with a constant flow rate can be introduced into the inside space of the reaction unit 1, and hence the gas analyzing device 100 can obtain a stable analysis result.

### (2) Analysis Operation of Gas Analyzing Device

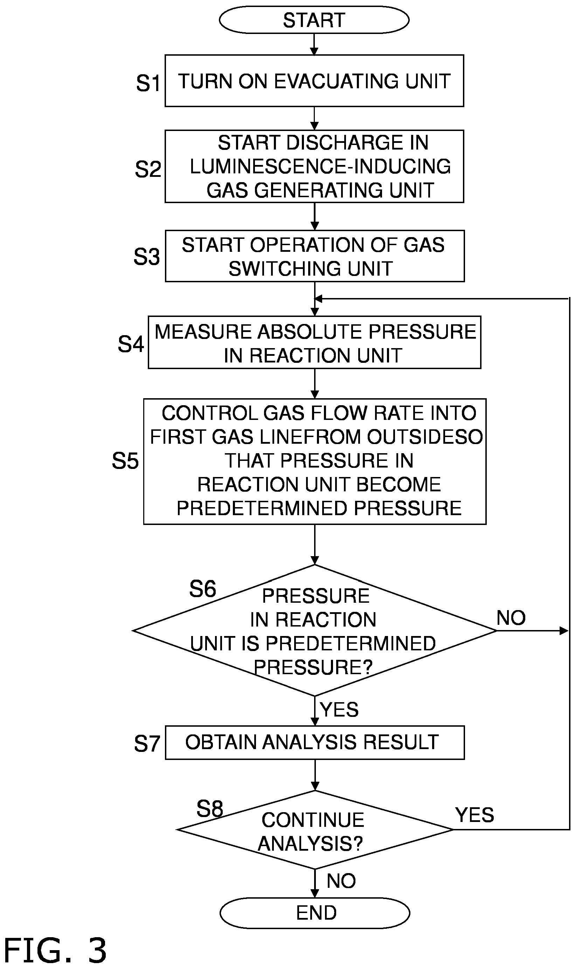

With reference to Fig. 3, an analysis operation of the analysis target gas in the gas analyzing device 100 having the above structure is described below. Fig. 3 is a flowchart illustrating the analysis operation of the gas analyzing device. In order to start analysis, the gas analyzing device 100 is activated. Specifically, in Step S1, the evacuating unit 3 is turned on. In addition, in Step S2, the arithmetic unit 91 generates discharge in the luminescence-inducing gas generating unit 11, to generate the luminescence-inducing gas. Further, in Step S3, the arithmetic unit 91 allows the gas switching unit 13 to operate, to switch at a predetermined period between the state where gas can flow between the gas port a and the gas port b, and the state where gas can flow between the gas port a and the gas port b.

In this way, the sample gas and/or the luminescence-inducing gas are introduced into the inside space of the reaction unit 1, by suction by the evacuating unit 3. In addition, in the inside space of the reaction unit 1, the switching operation of the gas switching unit 13 causes switching at a predetermined period between the state where the sample gas and the luminescence-inducing gas are introduced, and the state where only the luminescence-inducing gas is introduced.

After the initial operation described above, pressure control of the inside space of the reaction unit 1 is performed. Specifically, in Step S4, the arithmetic unit 91 receives a signal from the pressure measuring unit 7, and measures the absolute pressure in the reaction unit 1. Next, in Step S5, the arithmetic unit 91 controls the pressure control unit 5 based on the absolute pressure in the reaction unit 1 measured in Step S4, to adjust the pressure in the reaction unit 1 to a predetermined pressure. Specifically, the arithmetic unit 91 controls the pressure control unit 5 based on the absolute pressure in the reaction unit 1, and controls the flow rate of the gas introduced into the first gas line L1 from the outside, so that the pressure in the reaction unit 1 becomes a predetermined pressure.

More specifically, if the absolute pressure measured by the pressure measuring unit 7 is larger than a target pressure (the predetermined pressure), the arithmetic unit 91 decreases the opening degree of the gas flow passage L of the pressure control unit 5, to decrease the flow rate of the gas into the first gas line L1 from the outside, and hence the suction force of the inside space of the reaction unit 1 by the evacuating unit 3 is increased. In contrast, if the absolute pressure measured by the pressure measuring unit 7 is smaller than the target pressure, the arithmetic unit 91 increases the opening degree of the gas flow passage L of the pressure control unit 5, to increase the flow rate of the gas into the first gas line L1 from the outside, and hence the suction force of the inside space of the reaction unit 1 by the evacuating unit 3 is decreased.

Before starting analysis of the analysis target gas, the arithmetic unit 91 checks in Step S6 whether or not the pressure in the reaction unit 1 has become the predetermined pressure. If the pressure in the reaction unit 1 has not become the predetermined pressure yet ("No" in Step S6), the arithmetic unit 91 executes the above Steps S4 to S5 again. Note that, after the above Steps S4 to S5 are repeated for a predetermined time, if the pressure in the reaction unit 1 does not become the predetermined pressure, the arithmetic unit 91 may issue an error, a warning, or the like.

If the pressure in the reaction unit 1 has become the predetermined pressure ("Yes" in Step S6), the arithmetic unit 91 obtains an analysis result of the analysis target gas in Step S7. As described above, the inside space of the reaction unit 1 is switched at the predetermined period between the state where the sample gas and the luminescence-inducing gas are introduced, and the state where only the luminescence-inducing gas is introduced. Therefore, the arithmetic unit 91 obtains a signal (referred to as a first signal) output from the photodetector 15 at timing when the sample gas and the luminescence-inducing gas are introduced into the inside space of the reaction unit 1, and obtains a signal (referred to as a second signal), output from the photodetector 15 at timing when only the luminescence-inducing gas is introduced into the inside space of the reaction unit 1, to calculate a light emission amount due to the analysis target gas contained in the sample gas, based on a difference between the first signal and the second signal. Based on this light emission amount, the arithmetic unit 91 obtains the analysis result of the analysis target gas (e.g., calculates concentration of the analysis target gas contained in the sample gas). After that, the arithmetic unit 91 allows the display unit 93 to display the analysis result of the analysis target gas.

For instance, until the user performs a predetermined operation on the gas analyzing device 100, to instruct to stop the analysis operation by the gas analyzing device 100 (i.e., as long as "No" in Step S8 in Fig. 3), the above Steps S4 to S7 are repeatedly executed. In contrast, when the instruction to stop the analysis operation is issued ("Yes" in Step S8), the above analysis operation is finished.

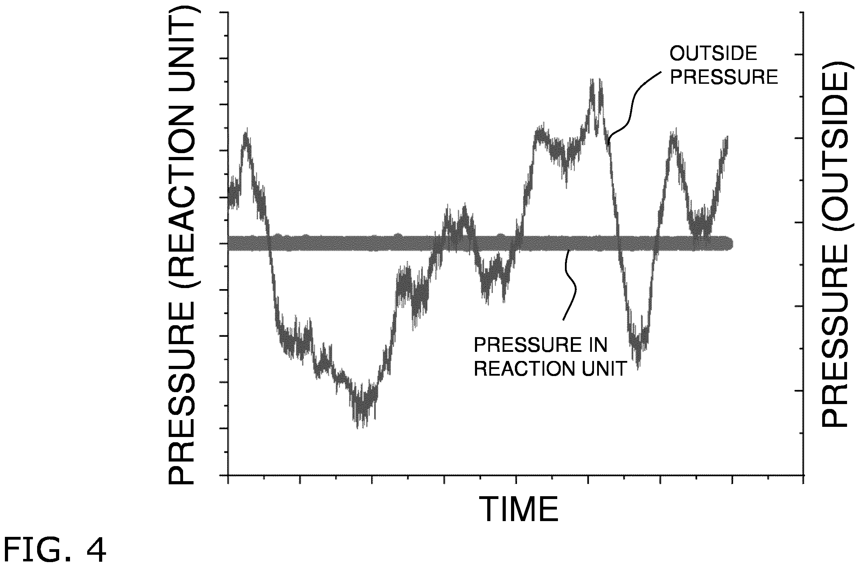

As described above, in the gas analyzing device 100, the pressure control unit 5 is connected to the first gas line L1, and the pressure control unit 5 is controlled based on the absolute pressure in the inside space of the reaction unit 1, to control the inflow amount of the gas into the first gas line L1 from the outside for evacuating the inside space of the reaction unit 1, and hence the pressure in the reaction unit is controlled. By this pressure control, as illustrated in Fig. 4, in the gas analyzing device 100, the pressure in the inside space of the reaction unit 1 is substantially constant at the predetermined pressure, without being affected by pressure fluctuation of the external gas. Fig. 4 is a diagram illustrating an example of pressure fluctuation of the external gas and pressure fluctuation of the inside space of the reaction unit.

In addition, by connecting the gas flow passage L of the pressure control unit 5 to the outside such as the atmosphere, the analysis target gas and/or the luminescence-inducing gas flowing in the first gas line L1 do not flow into the pressure control unit 5. As a result, even if the analysis target gas or the luminescence-inducing gas contains a corrosive gas or the like, deterioration of the pressure control unit 5 can be suppressed.

The gas analyzing device 100 includes the first orifice 17 disposed in the second gas line L2 into which the sample gas introduced into the inside space of the reaction unit 1 is introduced. By disposing the first orifice 17 in the second gas line L2, the introduction amount of the sample gas into the inside space of the reaction unit 1 becomes constant, and hence the gas analyzing device 100 can obtain a stable analysis result.

The gas analyzing device 100 includes the second orifice 19 disposed in the third gas line L3 into which the luminescence-inducing gas introduced into the inside space of the reaction unit 1 is introduced. By disposing the second orifice 19 in the third gas line L3, the introduction amount of the luminescence-inducing gas into the inside space of the reaction unit 1 becomes constant, and hence the gas analyzing device 100 can obtain a stable analysis result.

### 2. Features of Embodiments

(1) The gas analyzing device is a device for analyzing an analysis target gas by a chemical luminescence analysis method. The gas analyzing device includes a reaction unit, an evacuating unit, a first gas line, a pressure control unit, a pressure measuring unit, and a control unit. The reaction unit allows the analysis target gas and a luminescence-inducing gas to interact with each other. The evacuating unit evacuates the reaction unit. The first gas line connects the reaction unit and the evacuating unit. The pressure control unit includes a gas flow passage having one end connected to the first gas line and the other end connected to the outside, for introducing external gas into the first gas line, to control the pressure in the reaction unit by controlling a flow rate of the gas introduced into the first gas line. The pressure measuring unit measures the absolute pressure in the reaction unit. The control unit controls the pressure control unit based on the absolute pressure in the reaction unit measured by the pressure measuring unit, to control the flow rate of the gas introduced into the first gas line so that the pressure in the reaction unit becomes a predetermined pressure.

**In** the gas analyzing device described above, by controlling the inflow amount of the external gas into the first gas line in which the gas evacuated from the reaction unit flows, the pressure in the reaction unit is controlled. By this pressure control, in the gas analyzing device described above, the pressure in the reaction unit is not affected by pressure fluctuation of the external gas and is constant at a predetermined pressure.

**In** addition, by connecting the gas flow passage of the pressure control unit to the outside, and by introducing the external gas into the first gas line through this gas flow passage, the analysis target gas and/or the luminescence-inducing gas flowing in the first gas line do not flow into the pressure control unit. As a result, even if the analysis target gas or the luminescence-inducing gas contains a corrosive gas or the like, deterioration of the pressure control unit can be suppressed.
(2) The gas analyzing device of (1) described above may further include a second gas line and a first orifice. The analysis target gas introduced into the analysis unit is introduced into the second gas line. The first orifice is disposed in the second gas line. **In** this way, the introduction amount of the analysis target gas into the reaction unit is constant, and hence the gas analyzing device can obtain a stable analysis result.
(3) The gas analyzing device of (1) or (2) described above may further include a third gas line and a second orifice. The luminescence-inducing gas introduced into the analysis unit is introduced into the third gas line. The second orifice is disposed in the third gas line. **In** this way, the introduction amount of the luminescence-inducing gas into the reaction unit is constant, and hence the gas analyzing device can obtain a stable analysis result.
(4) **In** the gas analyzing device of (1) to (3) described above, the pressure control unit may be a proportional control valve. **In** this way, it is possible to inexpensively realize a structure in which the pressure in the reaction unit is not affected by external pressure fluctuation.
(5) **In** the gas analyzing device of (1) to (3) described above, the pressure control unit may be a piezo valve. **In** this way, the inflow amount of the external gas into the first gas line can be controlled more accurately. As a result, the pressure in the reaction unit is more hardly affected by the external pressure fluctuation.
(6) The gas analyzing device of (1) to (5) described above may further include a photodiode. The photodiode detects reaction light generated by interaction between the analysis target gas and the luminescence-inducing gas in the reaction unit. The photodiode is an inexpensive and small element, and hence the gas analyzing device can be downsized at low cost.
(7) The pressure control method is a pressure control method of the gas analyzing device for analyzing an analysis target gas by a chemical luminescence analysis method. The gas analyzing device includes a reaction unit configured to allow the analysis target gas and a luminescence-inducing gas to interact with each other, an evacuating unit configured to evacuate the reaction unit, a first gas line configured to connect the reaction unit and the evacuating unit, and a pressure control unit connected to the first gas line to be capable of introducing external gas into the first gas line, the pressure control unit controlling a flow rate of the gas introduced into the first gas line, to control the pressure in the reaction unit. The pressure control method includes:
   measuring absolute pressure in the reaction unit; and
   controlling the pressure control unit based on the absolute pressure in the reaction unit, to control the flow rate of the gas introduced into the first gas line so that the pressure in the reaction unit becomes a predetermined pressure.

In the above pressure control method of the gas analyzing device, by controlling the inflow amount of the external gas into the first gas line in which the gas evacuated from the reaction unit flows, the pressure in the reaction unit is controlled. By this pressure control method, the pressure in the reaction unit is hardly affected by pressure fluctuation of the external gas. As a result, pressure fluctuation in the reaction unit can be suppressed.

(8) A program according to another aspect of the present invention is a program that causes a computer to execute the above pressure control method (7) of the gas analyzing device.

### 3. Other Embodiments

Although the embodiments of the present invention are described above, the present invention is not limited to the above embodiments, but can be variously modified within the scope of the invention without deviating from the spirit thereof. In particular, the plurality of the embodiments and variations described in this specification can be arbitrarily combined as necessary.
(A) In the analysis operation described above with reference to the flowchart of Fig. 3, the order of the steps and operations in the steps of the flowchart of Fig. 3 can be appropriately modified without deviating from the spirit of the invention.
(B) If ozone (O₃) is used as the luminescence-inducing gas, intense light emission occurs in particular when it interacts with nitrogen monoxide (NO) among nitrogen oxides (NOx). Therefore, in order that other nitrogen oxides (NOx) can also be detected in the gas analyzing device 100, it may be possible to dispose a unit that is configured to convert nitrogen oxides (NOx) into nitrogen monoxide (NO) in the second gas line L2 of the gas analyzing device 100.
(C) The photodetector 15 is not limited to the photodiode, but may be a multiplier phototube. By using the multiplier phototube as the photodetector 15, the reaction light can be detected with good sensitivity. In addition, the reaction unit 1 may be large.
(D) It may be possible to eliminate the gas switching unit 13 and to introduce only the sample gas and the luminescence-inducing gas when performing analysis. In this case, the luminescence-inducing gas may be introduced into the reaction unit 1 for a purpose of obtaining a background signal to the signal obtained when the sample gas and the luminescence-inducing gas are introduced into the reaction unit 1.
(E) The gas analyzing device 100 may include, besides the member described above, a filter for removing dust or the like from the sample gas, a member for removing moisture from the gas introduced into the reaction unit 1 (such as a mist trap), or the like, for example.
(F) When obtaining the second signal that is used as the background signal in analysis of the analysis target gas, the reference gas and the luminescence-inducing gas may be introduced into the inside space of the reaction unit 1, instead of introducing only the luminescence-inducing gas into the inside space of the reaction unit 1. The reference gas is a gas that does not contain the analysis target gas, and the reference gas is air, for example. In addition, the reference gas may be a raw material gas of the luminescence-inducing gas. If the reference gas is introduced into the inside space of the reaction unit 1 through another gas line, an orifice may also be disposed in this gas line.

### INDUSTRIAL APPLICABILITY

The present invention can be widely applied to gas analyzing devices using the chemical luminescence analysis method.

### REFERENCE SIGNS LIST

100 gas analyzing device
1 reaction unit
3 evacuating unit
5 pressure control unit
7 pressure measuring unit
9 control unit
91 arithmetic unit
93 display unit
11 luminescence-inducing gas generating unit
13 gas switching unit
15 photodetector
17 first orifice
19 second orifice
L gas flow passage
L1 first gas line
L2 second gas line
L3 third gas line
L4 fourth gas line
L5 fifth gas line
a-c gas port

## Claims

1. A gas analyzing device for analyzing an analysis target gas by a chemical luminescence analysis method, the device comprising:
a reaction unit configured to allow the analysis target gas and a luminescence-inducing gas to interact with each other;
an evacuating unit configured to evacuate the reaction unit;
a first gas line configured to connect the reaction unit and the evacuating unit;
a pressure control unit including a gas flow passage having one end connected to the first gas line and the other end connected to the outside, for introducing external gas into the first gas line, to control the pressure in the reaction unit by controlling a flow rate of the gas introduced into the first gas line;
a pressure measuring unit configured to measure absolute pressure in the reaction unit; and
a control unit configured to control the pressure control unit based on the absolute pressure in the reaction unit measured by the pressure measuring unit, to control the flow rate of the gas introduced into the first gas line so that the pressure in the reaction unit becomes a predetermined pressure.

2. The gas analyzing device according to claim 1, further comprising:
a second gas line to which the analysis target gas introduced into the reaction unit is introduced; and
a first orifice disposed in the second gas line.

3. The gas analyzing device according to claim 1, further comprising:
a third gas line to which the luminescence-inducing gas introduced into the reaction unit is introduced; and
a second orifice disposed in the third gas line.

4. The gas analyzing device according to claim 1, wherein the pressure control unit is a proportional control valve.

5. The gas analyzing device according to claim 1, wherein the pressure control unit is a piezo valve.

6. The gas analyzing device according to claim 1, further comprising a photodiode configured to detect reaction light generated when the analysis target gas and the luminescence-inducing gas interact with each other in the reaction unit.

7. A pressure control method of the gas analyzing device for analyzing an analysis target gas by a chemical luminescence analysis method, the device including a reaction unit configured to allow the analysis target gas and a luminescence-inducing gas to interact with each other, an evacuating unit configured to evacuate the reaction unit, a first gas line configured to connect the reaction unit and the evacuating unit, and a pressure control unit connected to the first gas line to be capable of introducing external gas into the first gas line, the pressure control unit controlling a flow rate of the gas introduced into the first gas line, to control the pressure in the reaction unit, the method comprising:
measuring absolute pressure in the reaction unit; and
controlling the pressure control unit based on the absolute pressure in the reaction unit, to control the flow rate of the gas introduced into the first gas line so that the pressure in the reaction unit becomes a predetermined pressure.

8. A program that causes a computer to execute a pressure control method of a gas analyzing device for analyzing an analysis target gas by a chemical luminescence analysis method, the device including a reaction unit configured to allow the analysis target gas and a luminescence-inducing gas to interact with each other, an evacuating unit configured to evacuate the reaction unit, a first gas line configured to connect the reaction unit and the evacuating unit, and a pressure control unit connected to the first gas line to be capable of introducing external gas into the first gas line, the pressure control unit controlling a flow rate of the gas introduced into the first gas line, to control the pressure in the reaction unit, wherein the pressure control method includes the steps of:
measuring absolute pressure in the reaction unit; and
controlling the pressure control unit based on the absolute pressure in the reaction unit, to control the flow rate of the gas introduced into the first gas line so that the pressure in the reaction unit becomes a predetermined pressure.
